# EUROPÄISCHE PATENTSCHRIFT

(11) **EP 1 960 700 B1**
(45) Veröffentlichungstag und Bekanntmachung des Hinweises auf die Patenterteilung: **28.10.2009**
(21) Anmeldenummer: 06829246.5
(22) Anmeldetag: 02.12.2006
(51) Int. Cl.: F16H 63/20, F16H 61/32

(54) **BETÄTIGUNGSVORRICHTUNG FÜR EIN MEHRERE GANGSTUFEN AUFWEISENDES GETRIEBE**
ACTUATING DEVICE FOR A TRANSMISSION HAVING A PLURALITY OF GEAR STAGES
DISPOSITIF DE COMMANDE POUR TRANSMISSION COMPORTANT PLUSIEURS VITESSES

(30) Priorität: 07.12.2005 DE 102005058406; 17.11.2006 DE 102006054611
(43) Veröffentlichungstag der Anmeldung: 27.08.2008
(73) Patentinhaber: Dr. Ing. h.c.F. Porsche Aktiengesellschaft, 70435 Stuttgart (DE)
(72) Erfinder: KRAXNER, Dieter, 75449 Wurmberg (DE)
(86) Internationale Anmeldenummer: PCT/EP2006/011582
(87) Internationale Veröffentlichungsnummer: WO 2007/065611

(56) Entgegenhaltungen:
- WO-A-01/61218
- DE-A1- 10 052 607
- DE-A1- 10 342 133
- DE-A1-102005 000 886
- DE-B- 1 124 829
- FR-A- 1 164 713
- FR-A1- 2 192 336
- US-A1- 2005 005 724

## Beschreibung

Die Erfindung betrifft eine Betätigungsvorrichtung für ein mehrere Gangstufen aufweisendes Getriebe, insbesondere Kraftfahrzeuggetriebe, mit mindestens einer elektrischen Wähleinrichtung und einer elektrischen Schalteinrichtung, zum Anwählen mindestens eines Schaltelements und Schalten mittels des mindestens einen Schaltelements, mit einer ersten hohlen Welle, auf der das mindestens eine Schaltelement gelagert ist, wobei die erste Welle mittels eines Schaltmotors drehbar ist, mit mindestens einer koaxial zur ersten Welle innerhalb dieser angeordneten zweiten Welle, wobei die mindestens eine zweite Welle mittels der mindestens einen Wähleinrichtung relativ zur ersten Welle beweglich ist.

Kraftfahrzeug-Getriebeeinrichtungen sind in diversen Ausgestaltungen bekannt. Ausgehend von konventionellen Handschaltgetrieben wurden beispielsweise Automatisierte Schaltgetriebe (ASG) geschaffen, bei denen Schaltvorgänge elektronisch gesteuert (ausgelöst) werden. Ferner sind Getriebe bekannt geworden, die parallel geschaltete Antriebsstrangzweige aufweisen, wie beispielsweise Doppelkupplungsgetriebe (DKG) bzw. Parallelschaltgetriebe (PSG).

Bekannt geworden sind ferner diverse Betätigungseinrichtungen für Getriebe. Eine solche ist beispielsweise in der DE 103 16 434 A1 beschrieben. Die dort erläuterte Betätigungseinrichtung ist elektromechanisch ausgebildet und weist einen Schaltmotor für die Erzeugung von Schaltbewegungen und einen Wählmotor für die Erzeugung von Wählbewegungen auf.

Gangwechselvorgänge laufen in klassisch gestalteten, gestuften Kraftfahrzeug-Getriebeeinrichtungen - ausgehend von dem alten Gang - in drei Schritten zeitlicher Abfolge ab: Auslegen des alten Ganges - Wählen - Einlegen des Zielganges. Es sind darüber hinaus Gestaltungen von Kraftfahrzeuggetrieben bekannt geworden, bei denen das Wählen bzw. Wählbewegungen vor dem Auslegen des alten Ganges stattfinden kann/können. Derartige Getriebegestaltungen sind beispielsweise in der DE 103 16 434 A1, DE 10 2005 000 886 A1 und der DE 10 2005 053 867 A1 beschrieben. Spezifische Getriebegestaltungen dieser Art werden auch als "Active Interlock" bezeichnet.

Bei einem solchen "Active Interlock" ist in aller Regel vorgesehen, dass das Schaltelement auch bei eingelegtem Gang in eine Mittel- bzw. Neutralposition zurückbewegt werden kann, ohne den Gang auszulegen. Die Wählbewegung wird dabei möglich, bevor der Gang ausgelegt ist.

Die vorstehend genannte DE 10 2005 000 886 A1 offenbart eine Betätigungsvorrichtung für ein mehrere Gangstufen aufweisendes Getriebe mit den Merkmalen der Eingangs genannten Art. Bei dieser Vorrichtung ist ein Schaltelement, das insbesondere als Schaltfinger ausgebildet ist, zum Schalten drehbeweglich und zum Wählen in Richtung seiner Drehachse beweglich angeordnet. Das Schaltelement ist mit der ersten Welle, die mittels eines Elektromotors drehbeweglich ist, zum Erzeugen einer Drehbewegung des Schaltelements drehfest verbunden. Die zweite drehbewegliche Welle, die gleichfalls mittels eines Elektromotors antreibbar ist, steht mit dem Schaltelement zum Erzeugen einer durch Verdrehen der zweiten Welle bewirkbaren axialen Verlagerung des Schaltelements in Wirkverbindung. Die Drehachsen der beiden Wellen sind identisch. Eine solche Betätigungsvorrichtung zeichnet sich durch einen hohen konstruktiven Aufbau auf Grund des Erfordernisses in der axialen Verlagerung des Schaltelements aus.

Weitere Betätigungsvorrichtungen für Getriebe sind in der DE 102 05 689 C1 und der DE 198 42 532 A1 beschrieben. Insbesondere die DE 102 05 689 C1 offenbart, an Stelle eines Wählmotors eine Hydraulikeinheit zum Ausführen der Wählbewegungen vorzusehen, oder aber ein oder mehrere Magnete.

Aus der DE-PS 1 124 829 ist es bekannt, Schaltvorgänge zum Einlegen von Gängen bei einem Getriebe durch Verfahren eines Ziehkeils zu bewerkstelligen, durch den die zu schaltenden Räder mit der zugehörigen Schaltwelle durch Verschieben von beweglich in radialen Aussparungen der Schaltwelle gelagerten Kugeln in Taschen der schaltbaren Räder gekuppelt werden.

Aufgabe der Erfindung ist es, eine Betätigungsvorrichtung zu schaffen, die baulich einfach gestaltet ist und deren Schaltelemente sich einfach anwählen und schalten lassen.

Gelöst wird die Aufgabe durch eine Betätigungsvorrichtung der Eingangs genannten Art, die folgende weitere Merkmal aufweist:
- Die erste Welle dient der Aufnahme mehrerer axial unverschieblich auf dieser gelagerter Schaltelemente, die radial innen mit Rastvorsprüngen versehen sind,
- die erste Welle ist mit Durchgangslöchern zur Aufnahme von Kugeln versehen,
- die mindestens eine zweite Welle ist mittels der mindestens einen Wähleinrichtung axial verschieblich,
- die mindestens eine zweite Welle ist radial außen mit mindestens einem Sperrwulst versehen, der in einer Nicht-Wählstellung der mindestens einen zweiten Welle außer Kontakt mit den Kugeln steht und in einer Wählstellung der mindestens einen zweiten Welle in Kontakt mit mindestens einer Kugel steht und diese in der Wählstellung in eine Rastvertiefung eines Schaltelements eingreift.

Wesentlich ist bei der erfindungsgemäßen Betätigungsvorrichtung zunächst, dass es zum Wählen und zum Schalten der Schaltelemente nicht erforderlich ist, diese in axialer Richtung der Wellen zu verschieben. Vielmehr sind die Schaltelemente axial unverschieblich auf der ersten Welle gelagert. Demzufolge braucht zum Auswählen des jeweiligen Schaltelementes nur eine drehfeste Verbindung zwischen dem Schaltelement und der ersten Welle hergestellt werden. Bewirkt wird dies durch Überführen der diesem Schaltelement zugeordneten mindestens einen Kugel in eine Raststellung mit einer Rastvertiefung des Schaltelements. Hierzu wird die Kugel beim axialen Verschieben der mindestens einen zweiten Welle über den dieser Kugel zugeordneten Sperrwulst der zweiten Welle radial nach außen gedrückt und bewirkt den Formschluss zwischen der Kugel und dem Schaltelement. Vorzugsweise wirkt der Sperrwulst in der Wählstellung mit zwei oder mehr Kugeln zusammen, die in eine entsprechende Anzahl von Rastvertiefungen des jeweiligen Schaltelements eingreifen.

Jedem Schaltelement, das insbesondere als Schaltfinger ausgebildet ist, sind vorzugsweise drei Kugeln zugeordnet. Diese Kugeln sind insbesondere gleichmäßig über den Umfang der ersten Welle verteilt angeordnet, schließen somit, bezogen auf den jeweiligen Kugelmittelpunkt, einen Winkel von 120° ein.

Bevorzugter Verwendungszweck der Betätigungsvorrichtung ist derjenige bei einem Doppelkupplungsgetriebe oder Parallelschaltgetriebe, unter dem Aspekt des vorbeschriebenen Active Interlock.

Um bei dem Getriebe die erforderlichen Schaltvorgänge bewerkstelligen zu können, ist vorteilhaft vorgesehen, dass eine zweite Welle oder zwei zweite Wellen vorgesehen sind. Bei Verwendung einer zweiten Welle wird diese beispielsweise mittels eines Elektromotors oder eines Elektromagneten axial verschoben. Bei Verwendung zweier zweiter Wellen, die konzentrisch zur selben Achse hintereinander angeordnet sind, wird es als besonders vorteilhaft angesehen, die axiale Verschiebung dieser beiden zweiten Wellen mittels Elektromagneten zu bewerkstelligen, wobei jede zweite Welle mittels eines Elektromagneten verschoben wird.

Im Fall einer zweiten Welle weist diese vorzugsweise zwei Sperrwülste auf, die ein Nacheinanderschalten mittels der diesen zugeordneten Schaltelemente erlauben, wobei im Falle des DKG bzw. PSG selbstverständlich sicher zu stellen ist, dass nicht gleichzeitig zwei Gänge eingelegt sind.

Die Variabilität der Ansteuerung der Schaltelemente ist erhöht, wenn statt der einen zweiten Welle mit den in definierten Abstand zueinander angeordneten Sperrwülsten zwei zweite Wellen vorgesehen sind, die unabhängig voneinander axial verstellbar sind. Dies ermöglicht es, die Schaltvorgänge noch variabler zu gestalten.

Die Sperrwülste der zweiten Welle sind vorzugsweise so gestaltet, dass die jeweilige zweite Welle insgesamt rotationssymmetrisch ist.

Bei Verwendung eines oder zweier Elektromagnete zum Betätigen der einen zweiten Welle oder der beiden zweiten Wellen wird es als besonders vorteilhaft angesehen, wenn der Elektromagnet bzw. die Elektromagneten bipolar ausgebildet sind. Dies ermöglicht eine aktive Verfahrbarkeit der jeweiligen zweiten Welle in zwei Richtungen, womit in diesen beiden Richtungen die Schaltvorgänge aktiv erfolgen können. Weitgehend beliebige Gangsprünge lassen sich somit hierdurch verwirklichen.

Als besonders vorteilhaft wird es angesehen, wenn die eine zweite Welle oder die beiden zweiten Wellen insgesamt vier Schaltelemente aufweist bzw. aufweisen. Lässt sich das jeweilige Schaltelement in die eine Richtung in eine erste Schaltstellung und in die entgegengesetzte Richtung in eine zweite Schaltstellung sowie die zwischen den beiden Schaltstellungen befindliche neutrale Schaltstellung überführen, lassen sich mittels der Schaltelemente acht Schaltstellungen des Getriebes darstellen.

Gemäß einer besonderen Ausführungsform der Erfindung ist vorgesehen, dass bei an dem jeweiligen Elektromagneten angelegter Spannung die diesem Elektromagneten zugeordnete zweite Welle axial verschoben ist und über die dem einen Schaltelement zugeordnete Kugel bzw. Kugeln das Schaltelement drehfest mit der ersten Welle verbunden ist. Somit ist nur bei Anlegen einer Spannung an den Elektromagneten das relevante Schaltelement drehfest mit der zweiten Welle verbunden und demzufolge geeignet, Schaltvorgänge auszulösen. Die Aktivierung des jeweiligen Elektromagneten erfolgt durch Anlegen einer Spannung, die aus dem Bordnetz entnommen wird.

Die Abmessungen von Kugeln und Aufnahmen des Schaltelements für die Kugeln sind vorzugsweise so abgestimmt, dass die Kugeln, ausgehend von der Wählstellung bei außer Kontakt mit den Kugeln gelangendem Sperrwulst der zweiten Welle, durch Drehen der ersten Welle in die Durchgangslöcher der ersten Welle, außer Kontakt mit den Rastvertiefungen des Schaltelements zurückgeschoben werden. Sobald keine Spannung mehr anliegt und die erste Welle im Sinne einer Schwenkbewegung zu rotieren beginnt, schiebt das Schaltelement die Kugel bzw. Kugeln mittels seitlicher Schräge der Rastvertiefung bzw. Rastvertiefungen wieder weiter radial nach innen in die erste Welle. Damit bleibt das Schaltelement in seiner alten Position und die zweite Welle schwenkt mit dem neu ausgewählten Schaltelement weiter.

Die Rastvertiefungen des jeweiligen Schaltelements sind insbesondere als Rastnuten ausgebildet, wobei die Rastvertiefungen unter einem Winkel von 20° zueinander angeordnet sind. Am Umfang weist das jeweilig Schaltelement somit achtzehn Rastvertiefungen bzw. Rastnuten auf.

Die Teilung der Rastvertiefungen ist vorzugsweise so gewählt, dass sie dem Verdrehwinkel des Schaltelements beim Einlegen bzw. Herausnehmen eines Gangs entspricht. Damit muss keine überflüssige Drehbewegung der ersten Welle ausgeführt werden.

Vorzugsweise wirkt das jeweilige Schaltelement, insbesondere Schaltfinger, mit einer Schaltstange zusammen, derart, dass das Schaltelement eine Rotationsbewegung der ersten Welle in eine Längsbewegung der Schaltstange verwandelt.

Weitere Merkmale der Erfindung ergeben sich aus den Unteransprüchen, der Beschreibung der Zeichnung und der Zeichnung selbst, ohne hierauf beschränkt zu sein.

In der Zeichnung sind bevorzugte Ausführungsbeispiele der Erfindung verdeutlicht. Es stellt dar:
- Fig. 1: für ein erstes Ausführungsbeispiel der Erfindung eine isometrische Darstellung der Betätigungsvorrichtung,
- Fig. 2: eine Draufsicht der in Fig. 1 gezeigten Betätigungsvorrichtung,
- Fig. 3: eine Darstellung der Betätigungsvorrichtung gemäß Fig. 1, ohne die Schaltelemente, zur Verdeutlichung der Funktion,
- Fig. 4: eine Darstellung gemäß Fig. 3, ohne die erste Welle veranschaulicht, zur Verdeutlichung der Funktion der Betätigungsvorrichtung,
- Fig. 5: eine Detaildarstellung der Betätigungsvorrichtung in der Freilaufstellung des gezeigten Schaltfingers,
- Fig. 6: eine Darstellung gemäß Fig. 5, veranschaulicht für die Sperrfunktion der Kugeln und damit den Kraftschluss zwischen erster Welle und Schaltfinger,
- Fig. 7: eine Darstellung gemäß der Fig. 6, allerdings bei um einen Winkel von 20° verschwenkter erster Welle, zur Verdeutlichung des Schaltens eines Gangs,
- Fig. 8 bis 12: Funktionsdarstellungen zur Verdeutlichung des Funktionsablaufs des Einlegens des ersten Gangs und des zweiten Gangs des Getriebes sowie Herausnehmen des ersten Gangs des Getriebes,
- Fig. 13: ein zweites Ausführungsbeispiel der erfindungsgemäßen Betätigungsvorrichtung in einer isometrischen Darstellung gemäß der Fig. 1,
- Fig. 14: eine Detaildarstellung der Betätigungsvorrichtung nach Fig. 13 in einer der Funktion der Betätigungsvorrichtung nach der ersten Ausführungsform gemäß Fig. 8 entsprechenden Funktion.

Die nachfolgend zu beschreibende Betätigungsvorrichtung findet Verwendung für ein mehrere Gangstufen aufweisendes Getriebe, insbesondere ein Doppelkupplungsgetriebe (DKG). Die Betätigungsvorrichtung 1 weist eine elektrische Wähleinrichtung, die als Wählmotor 2 ausgebildet ist und eine elektrische Schalteinrichtung, die als elektrischer Schaltmotor 3 ausgebildet ist, auf. Bei Aktivierung des Schaltmotors 3 versetzt dieser über ein mit der Abtriebswelle des Schaltmotors 3 verbundenes Zahnrad 4 eine erste Welle 5, die als Hohlwelle ausgebildet ist, in eine Drehbewegung. Die Drehbewegung erfolgt über einen Teilkreis. Ein außen mit der ersten Welle 5 verbundenes Zahnrad 6 kämmt mit dem Zahnrad 4.

Die erste Welle 5 dient der Aufnahme mehrerer axial unverschieblich auf dieser gelagerter Schaltfinger, konkret der Lagerung von vier Schaltfingern 7. Jeder Schaltfinger 7 weist einen die erste Welle 5 umgebenden Ringabschnitt 8 sowie einen Fingeransatz 9 auf. Der jeweilige Ringabschnitt 8 ist radial innen mit Rastvertiefungen 10 versehen. Konkret weist der jeweilige Ringabschnitt 8 achtzehn Ringvertiefungen auf, womit der Ringabschnitt 8 bezüglich der Rastvertiefungen 10 einen Teilungswinkel von 20° besitzt. Die Rastvertiefungen 10 des jeweiligen Ringabschnitts 8 sind als Nuten ausgebildet, die sich über die gesamte axiale Länge des Ringabschnitts 8 erstrecken.

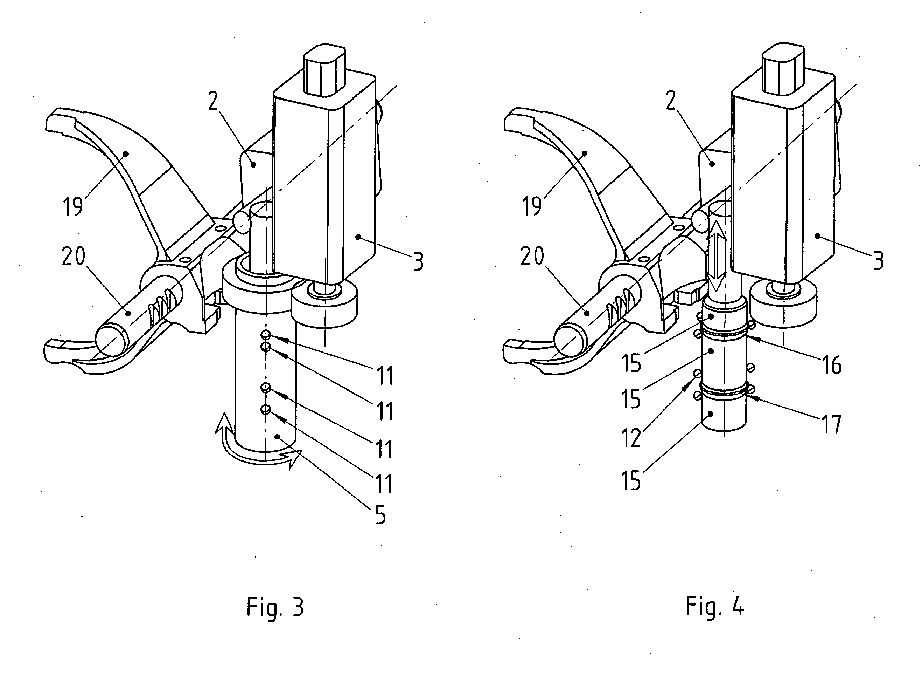

Mit geringem Spiel durchsetzt die erste Welle 5 die vier Schaltfinger 7. Über nicht dargestellte Mittel sind die Schaltfinger 7 auf der ersten Welle axial unverschieblich gelagert. In dem Bereich, in dem die vier Schaltfinger 7 angeordnet sind, ist die erste Welle 5 mit Löchern 11 versehen, die die erste Welle 5 durchsetzen. Im Bereich jedes der vier Schaltfinger 7 weist die erste Welle 5 drei Löcher 11 auf, wobei der Teilungswinkel der ersten Welle 5 bezüglich dieser Löcher 11 120° beträgt. Die Orientierung der Lochanordnungen der diversen Schaltfinger ist identisch. Dies bedeutet, dass am Umfang der ersten Welle 5 drei Lochreihen gebildet sind, die parallel zur Längsachse der ersten Welle verlaufen. Eine solche Lochreihe ist in Fig. 3 veranschaulicht.

In das jeweilige Loch 11 ist eine Kugel 12 eingesetzt, deren Durchmesser größer ist als die Wandungsstärke der ersten Welle 5. Die Wölbung der Kugel 12 entspricht in etwa der Krümmung der Rastvertiefungen. Die Kugel 12 ist soweit radial nach außen bewegt, das sie gegen den Grund der dieser Kugel 12 zugeordneten Rastvertiefung 10 gelangt. In dieser Stellung schließt die Kugel 12 auf ihrer der Rastvertiefung 10 abgewandten Seite mit der Innenkontur der ersten Welle 5 ab. Wirkt keine Kraft radial nach außen auf die Kugel 12, bewirken die geometrischen Abmessungen von Kugel 12 und Rastvertiefung 10, dass bei einer Relativverschwenkung von erster Welle 5 und Schaltfinger 7 die Kugel 12 auf Grund der Formschrägen der Rastvertiefung 10 radial nach innen, somit aus der Rastvertiefung 10 bewegt wird.

Der Wählmotor 2 überträgt seine Bewegung, genauso wie der Schaltmotor 3, über ein Getriebe. Dieses Getriebe 13 des Wählmotors 2 dient der axialen Verschiebung einer zweiten Welle 14, die die erste Welle 5 durchsetzt. Diese zweite Welle 14 weist einen Wellenabschnitt 15 konstanten Außendurchmessers auf. Dieser Wellenabschnitt 15 ist durch zwei Sperrwülste 16 und 17 unterbrochen. Die Sperrwülste 16 und 17 sind als identische, über den Wellenabschnitt 15 radial der vorstehende Kreisringe ausgebildet, wobei sich deren Ringebene senkrecht zur Längsachse der zweiten Welle 14 erstreckt. Ausgehend von dem Außendurchmesser des Wellenabschnitts 15 erweitert sich der Außendurchmesser der zweiten Welle 14 im Übergang zur Sperrwulst 16 bzw. 17 nicht sprungartig, sondern stetig. Diese Erweiterung ist auf die Abmessung der Kugeln 12 abgestimmt. Jeder Sperrwulst 16 bzw. 17 ist, bei Bewegung der jeweiligen zweiten Welle 14 in einer der beiden Richtungen, mit drei Kugeln 12 in Kontakt bringbar. Wenn die Sperrwülste 16 bzw. 17 keine Kugeln 12 kontaktieren, befinden sich die Kugeln 12 in deren radial eingeschobenen Stellung außerhalb der Rastvertiefungen 10 und in Anlage am Wellenabschnitt 15. Wird die zweite Welle 14 axial verschoben, gelangt der jeweilige Sperrwulst 16 bzw. 17 gegen die drei Kugeln 12 eines der Schaltfinger 7 und drückt diese radial nach außen. Liegen die Kugeln 12 an der erhabensten Stelle des Sperrwulstes 16 bzw. 17 an, sind sie in die Rastvertiefungen 10 eingesetzt und können, da der Sperrwulst 16 bzw. 17 auf diese drückt, nicht radial nach innen ausweichen. In dieser Position ist eine drehfeste Verbindung zwischen der ersten Welle 5 und dem dem Sperrwulst 16 bzw. 17 zugeordneten Schaltfinger 7 herbeigeführt. Durch Schwenken der ersten Welle 5 kann der Fingeransatz 9 des Schaltfingers 7 betätigt werden.

Im vorbeschriebenen Sinne stellt die zweite Welle 14 somit die Vorwählwelle zwecks Gassenwahl dar, während die erste Welle 5 mit den Schaltfingern 7 der Gangwahl dient.

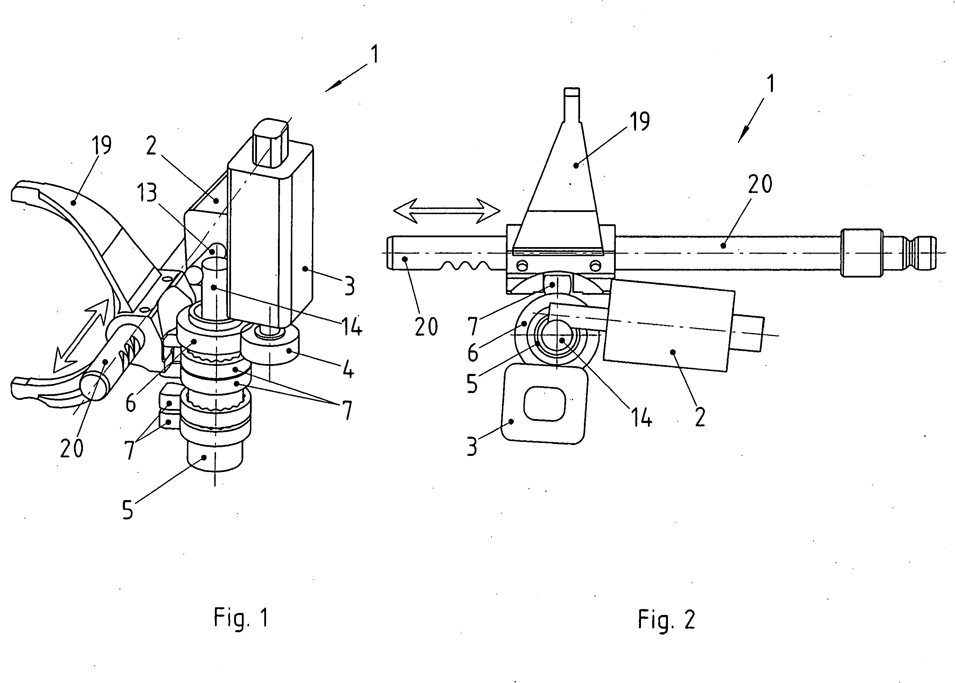

Die Fig. 1 bis 4 zeigen den grundsätzlichen Aufbau der Betätigungsvorrichtung.

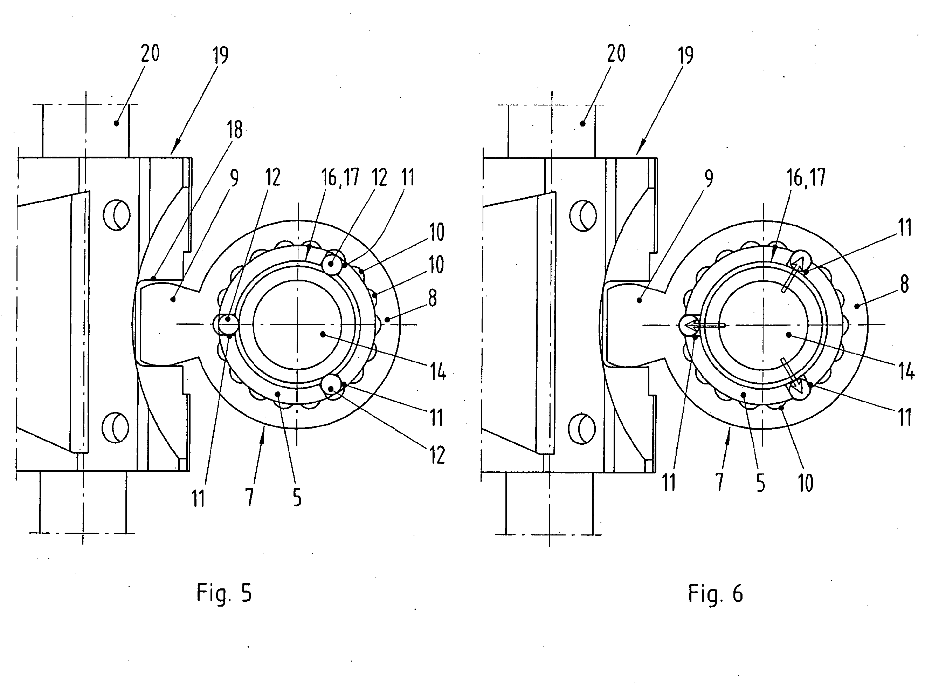

Die Fig. 5 und 6 zeigen die Kugeln 12 in Freilaufstellung (Fig. 5) und in Sperrstellung (Fig. 6).

Wie der Darstellung der Fig. 5 für den Zustand der Kugel in Freilaufstellung zu entnehmen ist, ist kein Kraftschluss zwischen der ersten Welle 5 und dem Schaltfinger 7 vorhanden. Der Fig. 6 für den Zustand der Kugeln in Sperrstellung ist zu entnehmen, dass die zweite Welle 14 (aus der Zeichenebene heraus) bewegt wurde, wodurch der Sperrwulst 16 bzw. 17 die Kugeln 12 nach außen drückt. Hierdurch ergibt sich ein Kraftschluss zwischen der ersten Welle 5 und dem Schaltfinger 7.

Der Fingerabsatz 9 des jeweiligen Schaltfingers 7 wirkt mit einer Aussparung 18 einer Schaltgabel 19 des Getriebes zusammen, die im Sinne des in Fig. 1 gezeigten Doppelpfeiles zusammen mit einer Schaltstange 20 des Getriebes in Axialrichtung der Schaltstange 20 verschieblich ist.

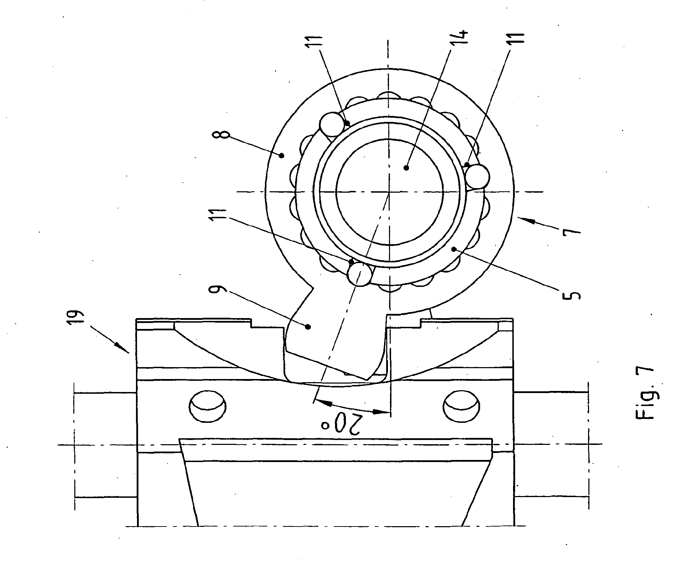

Fig. 7 veranschaulicht das Schalten eines Gangs. Nach Herstellung des Formschlusses kann durch Verdrehen der ersten Welle 5 mittels des Schaltmotors 3 ein Gang eingelegt werden. Die Teilung der Rastvertiefungen 10 am Schaltfinger 7 entspricht dem notwendigen Verdrehwinkel zum Einlegen eines Gangs (20°). Nach Einlegen eines Gangs kann die zweite Welle 14 wieder aus der Sperrposition entfernt werden, so dass kein Formschluss zwischen erster Welle 5 und Schaltfinger 7 mehr besteht. Durch die Teilung kann nun direkt eine andere Kugelebene gesperrt und Formschluss zu einem anderen Schaltfinger 7 hergestellt werden, ohne eine überflüssige Bewegung durchführen zu müssen.

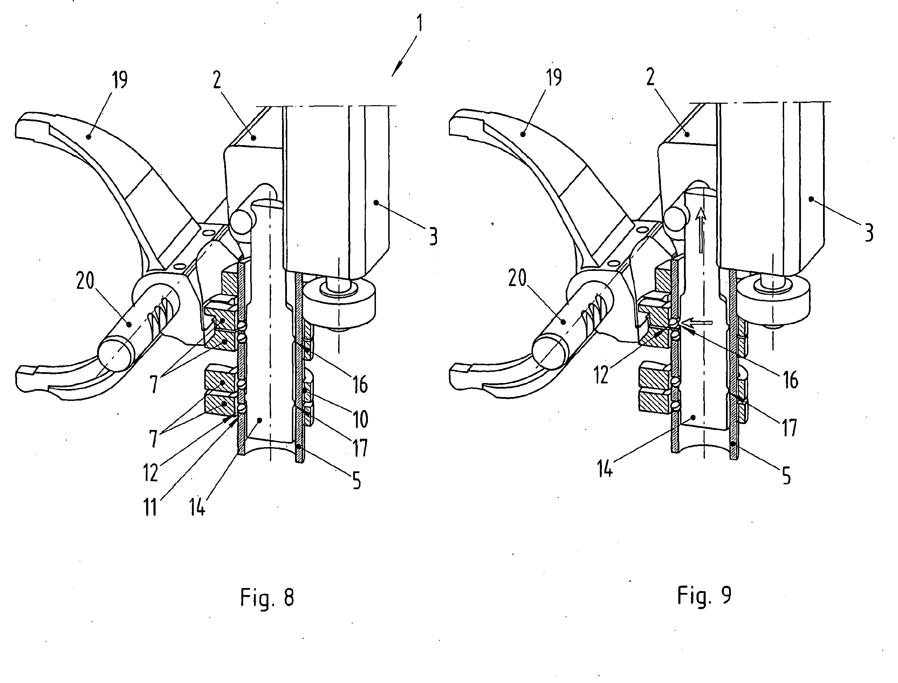

Die Fig. 8 bis 12 veranschaulichen ein Funktionsbeispiel, nämlich das Einlegen des ersten Gangs des Getriebes und des zweiten Gangs des Getriebes sowie das Herausnehmen des ersten Gangs.

Fig. 8 veranschaulicht die Neutralposition. Hierbei nimmt die zweite Welle 14 eine Stellung ein, in der keine der zwölf Kugeln der vier Schaltfinger 7 in Kontakt mit den Sperrwülsten 16, 17 ist. Dieser Darstellung ist im Übrigen zu entnehmen, dass die Kugelreihe des obersten Schaltfingers 7 in einem geringeren Abstand zur Kugelreihe des darunter befindlichen Schaltfingers 7 angeordnet ist, als die Kugelreihe des untersten Schaltfingers 7 zu der Kugelreihe des unmittelbar über diesem angeordneten Schaltfingers 7. Dies bedeutet, dass bei Beaufschlagung der Kugelreihe des obersten Schaltfingers 7 die Kugelreihe des zweituntersten Schaltfingers noch nicht beaufschlagt ist.

Fig. 9 veranschaulicht diesen Zustand. Die zweite Welle 14 wird nach oben bewegt. Der Sperrwulst 16 drückt die Kugeln 12 des obersten Schaltfingers 7 nach außen. Es ergibt sich somit ein Formschluss zwischen der ersten Welle 5 und diesem obersten Schaltfinger 7. - Hierdurch ist das Sperren des Schaltfingers für den ersten Gang erfolgt.

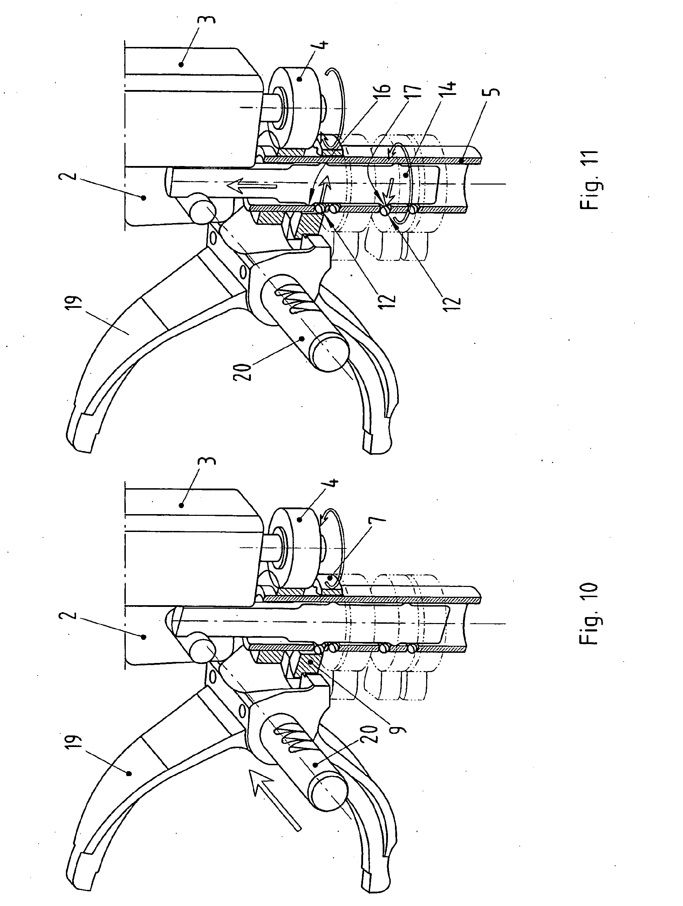

Wie der Darstellung der Fig. 10 zu entnehmen ist, erfolgt dann das Verdrehen der ersten Welle mittels des Schaltmotors 3. Dies bedingt die axiale Verschiebung der Schaltstange 20 mit Schaltgabel 19. - Der erste Gang ist damit eingelegt.

Fig. 11 veranschaulicht das Einlegen des zweiten Gangs: Die zweite Welle 14 wird weiter nach oben bewegt. Hierdurch wird der oberste Schaltfinger 7 für den ersten Gang entriegelt und der zweite Schaltfinger von unten, der dem zweiten Gang zugeordnet ist, gesperrt, indem der Sperrwulst 17 auf die diesem Schaltfinger zugeordneten Kugeln 12 einwirkt. Im Sinne des in dieser Fig. gezeigten gekrümmten Pfeiles erfolgt durch Betätigen des Schaltmotors 3 in entgegengesetzter Richtung das Schalten des zweiten Gangs. Schaltstange und Schaltgabel dieses zweiten Gangs sind aus Gründen zeichnerischer Klarheit nicht mitveranschaulicht.

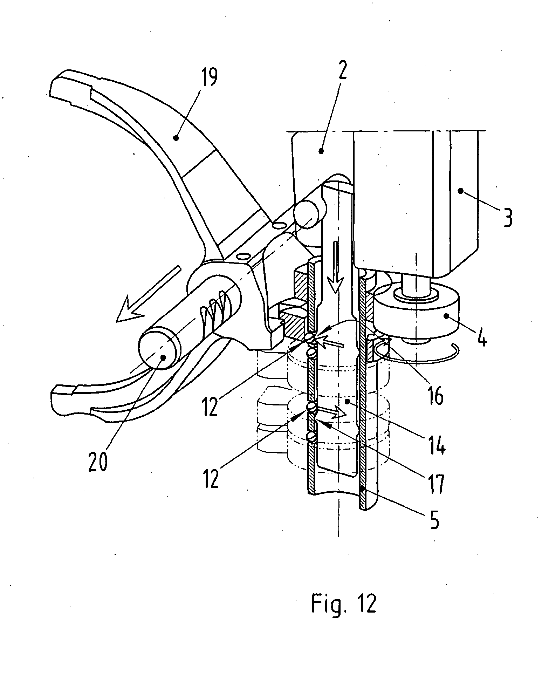

Fig. 12 veranschaulicht das Herausnehmen des ersten Gangs: Die zweite Welle 14 wird nach unten bewegt und hierbei der Schaltfinger 7 des ersten Gangs verriegelt und der Schaltfinger 7 des zweiten Gangs entriegelt. Durch Betätigen des Schaltmotors 3 wird, gegenüber der Bewegungsrichtung nach Fig. 11, in entgegengesetzter Richtung der erste Gang herausgenommen.

Vorstehende Ausführungen gelten sinngemäß für die Wahl anderer Gänge des Getriebes.

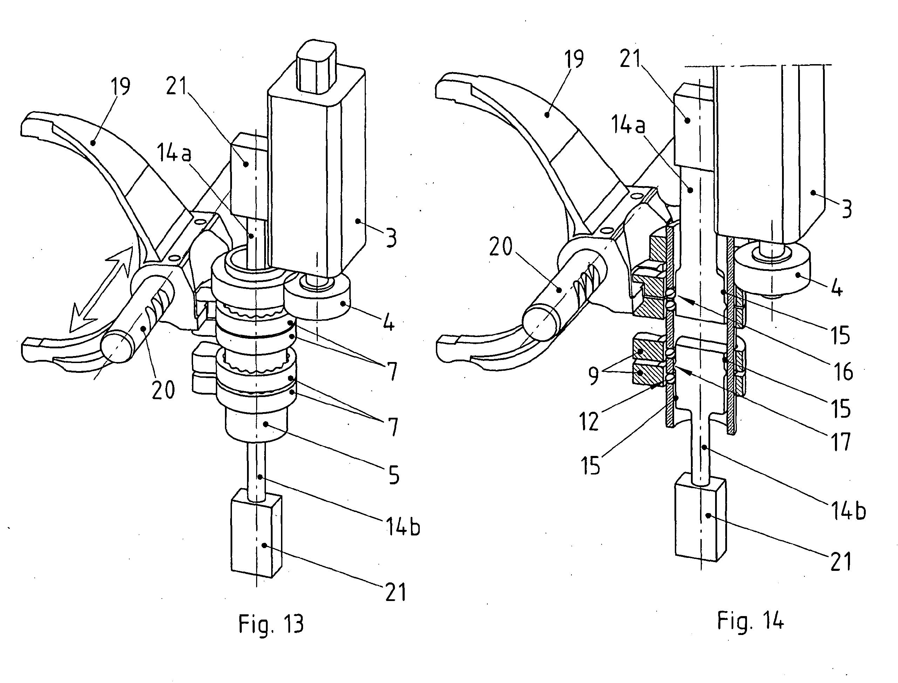

Das in den Fig. 13 und 14 veranschaulichte zweite Ausführungsbeispiel unterscheidet sich von dem Ausführungsbeispiel nach den Fig. 1 bis 12 nur dadurch, dass statt der einteiligen zweiten Welle 14 eine zweiteilige zweite Welle, bezeichnet durch die Bezugsziffern 14a und 14b, vorgesehen ist, wobei die axiale Verschiebung der jeweiligen Welle 14a, 14b durch einen bipolaren Elektromagneten 21 erfolgt. Die eine Welle 14a, die den beiden oberen Schaltfingern 7 zugeordnet ist, weist den Sperrwulst 16 und die untere Welle 14b, die den beiden unteren Schaltfingern 7 zugeordnet ist, weist den Sperrwulst 17 auf. Der Vorteil dieses zweiten Ausführungsbeispiels ist insbesondere darin zu sehen, dass durch die bipolaren Elektromagneten 21, die in beiden Bewegungsrichtungen der jeweiligen Welle 14a bzw. 14b präzise ansteuerbar sind, die Sperrwülste 16 und 17 unabhängig voneinander verschoben werden können, womit sich weitgehend beliebige Gangsprünge verwirklichen lassen. ,

### Bezugszeichenliste

- 1: Betätigungsvorrichtung
- 2: Wählmotor
- 3: Schaltmotor
- 4: Zahnrad
- 5: erste Welle
- 6: Zahnrad
- 7: Schaltfinger
- 8: Ringabschnitt
- 9: Fingeransatz
- 10: Rastvertiefung
- 11: Loch
- 12: Kugel
- 13: Getriebe
- 14: zweite Welle
- 14a: zweite Welle
- 14b: zweite Welle
- 15: Wellenabschnitt
- 16: Sperrwulst
- 17: Sperrwulst
- 18: Aussparung
- 19: Schaltgabel
- 20: Schaltstange
- 21: Elektromagnet

## Patentansprüche

1. Betätigungsvorrichtung (1) für ein mehrere Gangstufen aufweisendes Getriebe, insbesondere Kraftfahrzeuggetriebe, mit mindestens einer elektrischen Wähleinrichtung (2) und einer elektrischen Schalteinrichtung, zum Anwählen mindestens eines Schaltelements (7) und Schalten mittels des mindestens einen Schaltelements (7), mit einer ersten hohlen Welle (5), auf der das mindestens eine Schaltelement (7) gelagert ist, wobei die erste Welle (5) mittels eines Schaltmotors (3)drehbar ist, mit mindestens einer koaxial zur ersten Welle (5) innerhalb dieser angeordneten zweiten Welle (14), wobei die mindestens eine zweite Welle (14, 14a, 14b) mittels der mindestens einen Wähleinrichtung (2) relativ zur ersten Welle (5) beweglich ist, **gekennzeichnet durch** folgende Merkmale:
- Die erste Welle (5) dient der Aufnahme mehrerer axial unverschieblich auf dieser gelagerter Schaltelemente (7), die radial innen mit Rastvertiefungen (10) versehen sind,
- die erste Welle (5) ist mit Durchgangslöchern (11) zur Aufnahme von Kugeln (12) versehen,
- die mindestens eine zweite Welle (14, 14a, 14b) ist mittels der mindestens einen Wähleinrichtung (2) axial verschieblich,
- die mindestens eine zweite Welle (14, 14a, 14b) ist radial außen mit mindestens einem Sperrwulst (16, 17) versehen, der in einer Nicht-Wählstellung der mindestens einen zweiten Welle (14, 14a, 14b) außer Kontakt mit den Kugeln (12) steht und in einer Wählstellung der mindestens einen zweiten Welle (14, 14a, 14b) in Kontakt mit mindestens einer Kugel (12) steht und diese in der Wählstellung in eine Rastvertiefung (10) eines Schaltelements (7) eingreift.

2. Vorrichtung nach Anspruch 1, **dadurch gekennzeichnet, dass** das Kraftfahrzeuggetriebe als Doppelkupplungsgetriebe oder Parallelschaltgetriebe ausgebildet ist.

3. Vorrichtung nach Anspruch 1 oder 2, **dadurch gekennzeichnet, dass** eine einzige zweite Welle (14) mit mindestens zwei, insbesondere zwei in axialem Abstand angeordneten Sperrwülsten (16, 17) vorgesehen ist.

4. Vorrichtung nach Anspruch 3, **dadurch gekennzeichnet, dass** die zweite Welle (14) mittels eines Elektromotors (2) antreibbar ist.

5. Vorrichtung nach einem der Ansprüche 1 bis 3, **dadurch gekennzeichnet, dass** zwei zweite Wellen (14a, 14b) vorgesehen sind, wobei jede Welle (14a, 14b) mindestens einen Sperrwulst (16, 17), insbesondere einen Sperrwulst (16, 17) aufweist.

6. Vorrichtung nach Anspruch 5, **dadurch gekennzeichnet, dass** jede zweite Welle (14a, 14b) mittels eines Elektromagneten (21), insbesondere eines bipolaren Elektromagneten (21), verfahrbar ist.

7. Vorrichtung nach einem der Ansprüche 1 bis 6, **dadurch gekennzeichnet, dass** eine oder zwei zweite Welle(n)(14, 14a, 14b) insgesamt vier Schaltelemente (7), insbesondere Schaltfinger (7), aufweist bzw. aufweisen.

8. Vorrichtung nach einem der Ansprüche 1 bis 7, **dadurch gekennzeichnet, dass** pro Schaltelement (7) drei Kugeln (12) vorgesehen sind, wobei die Kugeln (12) gleichmäßig über den Umfang der ersten Welle (5) verteilt angeordnet sind.

9. Vorrichtung nach einem der Ansprüche 6 bis 8, **dadurch gekennzeichnet, dass** jeder Elektromagnet (21) eine zwei Schaltelemente (7) aufweisende zweite Welle (14a, 14b) betätigt.

10. Vorrichtung nach einem der Ansprüche 6 bis 9, **dadurch gekennzeichnet, dass** bei an dem jeweiligen Elektromagneten (21) angelegter Spannung die diesem Elektromagneten (21)zugeordnete zweite Welle (14a, 14b) axial verschoben ist und über mindestens eine einem Schaltelement (7) zugeordnete Kugel (12) das Schaltelement (7) drehfest mit der ersten Welle verbunden ist.

11. Vorrichtung nach einem der Ansprüche 1 bis 10, **dadurch gekennzeichnet, dass** die Abmessungen von Kugeln (12) und Rastvertiefungen (10) des Schaltelements (7) so abgestimmt sind, dass die Kugeln (12), ausgehend von der Wählstellung bei außer Kontakt mit den Kugeln (12) gelangendem Sperrwulst (16, 17) der zweiten Welle (14a, 14b), durch Drehen der ersten Welle (5) in die Durchgangslöcher (11) der ersten Welle (5), außer Kontakt mit den Rastvertiefungen (10) des Schaltelements (7) zurückgeschoben werden.

12. Vorrichtung nach einem der Ansprüche 1 bis 11, **dadurch gekennzeichnet, dass** das jeweilige Schaltelement (7), insbesondere Schaltfinger (7), mit einer Schaltstange (20) zusammenwirkt, derart, dass das Schaltelement (7) eine Rotationsbewegung der ersten Welle (5) in eine Längsbewegung der Schaltstange verwandelt.

13. Vorrichtung nach einem der Ansprüche 1 bis 12, **dadurch gekennzeichnet, dass** die Teilung der Rastvertiefungen (10) dem Verdrehwinkel des Schaltelements (7) beim Einlegen bzw. Herausnehmen des Gangs entspricht.

14. Vorrichtung nach einem der Ansprüche 1 bis 13, **dadurch gekennzeichnet, dass** die Teilung der Rastvertiefungen (10), insbesondere Rastnuten (10), 20° beträgt.

## Claims

1. Actuating device (1) for a transmission, in particular a motor vehicle transmission, having a plurality of gear stages, said actuating device having at least one electric selector device (2) and one electric switching device for selecting at least one switching element (7) and switching by means of the at least one switching element (7), having a first hollow shaft (5) on which the at least one switching element (7) is mounted, wherein the first shaft (5) can be rotated by means of a switching motor (3), and having at least one second shaft (14) which is arranged within the first shaft (5), coaxially thereto, wherein the at least one second shaft (14, 14a, 14b) can be moved relative to the first shaft (5) by means of the at least one selector device (2), **characterized by** the following features:
- the first shaft (5) serves to hold a plurality of switching elements (7) which are mounted in an axially non-displaceable fashion thereon and are provided with latching depressions (10) radially on the inside,
- the first shaft (5) is provided with through-holes (11) for receiving balls (12),
- the at least one second shaft (14, 14a, 14b) can be displaced axially by means of the at least one selector device (2),
- the at least one second shaft (14, 14a, 14b) is provided, radially on the outside, with at least one locking bead (16, 17) which is out of contact with the balls (12) in a non-selected position of the at least one second shaft (14, 14a, 14b), and is in contact with at least one ball (12) in a selected position of the at least one second shaft (14, 14a, 14b), and in the selected position said at least one second shaft (14, 14a, 14b) engages said ball (12) in a latching depression (10) in a switching element (7).

2. Device according to Claim 1, **characterized in that** the motor vehicle transmission is embodied as a double-clutch transmission or parallel transmission.

3. Device according to Claim 1 or 2, **characterized in that** a single second shaft (14) is provided with at least two locking beads (16, 17), in particular two locking beads (16, 17) arranged at an axial distance.

4. Device according to Claim 3, **characterized in that** the second shaft (14) can be driven by means of an electric motor (2).

5. Device according to one of Claims 1 to 3,
**characterized in that** two second shafts (14a, 14b) are provided, wherein each shaft (14a, 14b) has at least one locking bead (16, 17), in particular one locking bead (16, 17).

6. Device according to Claim 5**, characterized in that** each second shaft (14a, 14b) can be moved by means of an electromagnet (21), in particular a bipolar electromagnet (21).

7. Device according to one of Claims 1 to 6,
**characterized in that** one or two second shafts (14, 14a, 14b) have a total of four switching elements (7), in particular switching fingers (7).

8. Device according to one of Claims 1 to 7,
**characterized in that** three balls (12) are provided per switching element (7), wherein the balls (12) are arranged distributed uniformly over the circumference of the first shaft (5).

9. Device according to one of Claims 6 to 8,
**characterized in that** each electromagnet (21) activates a second shaft (14a, 14b) having two switching elements (7).

10. Device according to one of Claims 6 to 9,
**characterized in that** when a voltage is applied to the respective electromagnet (21), the second shaft (14a, 14b) which is assigned to this electromagnet (21) is displaced axially and the switching element (7) is connected in a rotationally fixed fashion to the first shaft by means of at least one ball (12) which is assigned to a switching element (7).

11. Device according to one of Claims 1 to 10,
**characterized in that** the dimensions of balls (12) and latching depressions (10) of the switching element (7) are matched in such a way that, starting from the selected position when the locking bead (16, 17) of the second shaft (14a, 14b) has moved out of contact with the balls (12), the balls (12) are pushed back out of contact with the latching depressions (10) of the switching element (7) when the first shaft (5) rotates into the through-holes (11) in the first shaft (5).

12. Device according to one of Claims 1 to 11,
**characterized in that** the respective switching element (7), in particular switching finger (7) interacts with a switching rod (20) in such a way that the switching element (7) converts a rotational movement of the first shaft (5) into a longitudinal movement of the switching rod.

13. Device according to one of Claims 1 to 12,
**characterized in that** the pitch of the latching depressions (10) corresponds to the angle of rotation of the switching element (7) when the gear speed is engaged or disengaged.

14. Device according to one of Claims 1 to 13,
**characterized in that** the pitch of the latching depressions (10), in particular latching grooves (10), is 20°.

## Revendications

1. Dispositif de commande (1) pour une transmission comportant plusieurs rapports de vitesse, notamment une transmission de véhicule automobile, comprenant au moins un dispositif de sélection électrique (2) et un dispositif de changement de vitesse électrique, pour sélectionner au moins un élément de changement de vitesse (7) et effectuer le changement de vitesse au moyen de l'au moins un élément de changement de vitesse (7), un premier arbre creux (5) sur lequel est monté l'au moins un élément de changement de vitesse (7), le premier arbre (5) pouvant tourner au moyen d'un moteur de changement de vitesse (3), au moins un deuxième arbre (14) disposé coaxialement au premier arbre (5) à l'intérieur de celui-ci, l'au moins un deuxième arbre (14, 14a, 14b) pouvant être déplacé au moyen de l'au moins un dispositif de sélection (2) par rapport au premier arbre (5), **caractérisé par** les caractéristiques suivantes :
- le premier arbre (5) sert à recevoir plusieurs éléments de changement de vitesse (7) montés de manière immobile axialement sur celui-ci, qui sont pourvus radialement à l'intérieur de renfoncements d'encliquetage (10),
- le premier arbre (5) est pourvu de trous de passage (11) pour recevoir des billes (12),
- l'au moins un deuxième arbre (14, 14a, 14b) est déplaçable axialement au moyen de l'au moins un dispositif de sélection (2),
- l'au moins un deuxième arbre (14, 14a, 14b) est pourvu radialement à l'extérieur d'au moins un bourrelet de blocage (16, 17), qui, dans une position de non-sélection de l'au moins un deuxième arbre (14, 14a, 14b), est hors de contact des billes (12), et dans une position de sélection de l'au moins un deuxième arbre (14, 14a, 14b), est en contact avec au moins une bille (12) et celle-ci vient en prise dans la position de sélection dans un renfoncement d'encliquetage (10) d'un élément de changement de vitesse (7).

2. Dispositif selon la revendication 1, **caractérisé en ce que** la transmission du véhicule automobile est réalisée sous forme de transmission à double embrayage ou de transmission à changement de vitesse parallèle.

3. Dispositif selon la revendication 1 ou 2,
**caractérisé en ce que** l'on prévoit un deuxième arbre unique (14) ayant au moins deux bourrelets de blocage (16, 17), et notamment deux bourrelets de blocage disposés à distance axiale.

4. Dispositif selon la revendication 3, **caractérisé en ce que** le deuxième arbre (14) peut être entraîné au moyen d'un moteur électrique (2).

5. Dispositif selon l'une quelconque des revendications 1 à 3, **caractérisé en ce que** l'on prévoit deux deuxièmes arbres (14a, 14b), chaque arbre (14a, 14b) présentant au moins un bourrelet de blocage (16, 17), notamment un seul bourrelet de blocage (16, 17).

6. Dispositif selon la revendication 5, **caractérisé en ce que** chaque deuxième arbre (14a, 14b) peut être déplacé au moyen d'un électroaimant (21), notamment d'un électroaimant bipolaire (21).

7. Dispositif selon l'une quelconque des revendications 1 à 6, **caractérisé en ce qu'**un ou deux deuxièmes arbres (14, 14a, 14b) présentent au total quatre éléments de changement de vitesse (7), notamment des doigts de changement de vitesse (7).

8. Dispositif selon l'une quelconque des revendications 1 à 7, **caractérisé en ce que** l'on prévoit trois billes (12) pour chaque élément de changement de vitesse (7), les billes (12) étant réparties uniformément sur la circonférence du premier arbre (5).

9. Dispositif selon l'une quelconque des revendications 6 à 8, **caractérisé en ce que** chaque électroaimant (21) commande un deuxième arbre (14a, 14b) présentant deux éléments de changement de vitesse (7).

10. Dispositif selon l'une quelconque des revendications 6 à 9, **caractérisé en ce que** lorsqu'une tension est appliquée à chaque électroaimant (21), le deuxième arbre (14a, 14b) associé à cet électroaimant (21) est déplacé axialement et l'élément de changement de vitesse (7) est connecté de manière solidaire en rotation au premier arbre par le biais d'au moins une bille (12) associée à un élément de changement de vitesse (7).

11. Dispositif selon l'une quelconque des revendications 1 à 10, **caractérisé en ce que** les dimensions des billes (12) et des renfoncements d'encliquetage (10) de l'élément de changement de vitesse (7) sont adaptées de telle sorte que les billes (12), à partir de la position de sélection lorsque le bourrelet de blocage (16, 17) du deuxième arbre (14a, 14b) est parvenu hors de contact des billes (12), soient repoussées par rotation du premier arbre (5) dans les trous de passage (11) du premier arbre(5), hors de contact des renfoncements d'encliquetage (10) de l'élément de changement de vitesse (7).

12. Dispositif selon l'une quelconque des revendications 1 à 11, **caractérisé en ce que** chaque élément de changement de vitesse (7), notamment chaque doigt de changement de vitesse (7), coopère avec une tige de changement de vitesse (20) de telle sorte que l'élément de changement de vitesse (7) convertisse un mouvement de rotation du premier arbre (5) en un mouvement longitudinal de la tige de changement de vitesse.

13. Dispositif selon l'une quelconque des revendications 1 à 12, **caractérisé en ce que** l'intervalle de séparation des renfoncements d'encliquetage (10) correspond à l'angle de rotation de l'élément de changement de vitesse (7) lors de l'enclenchement ou du désenclenchement de la vitesse.

14. Dispositif selon l'une quelconque des revendications 1 à 13, **caractérisé en ce que** l'intervalle de séparation des renfoncements d'encliquetage (10), en particulier des rainures d'encliquetage (10), vaut 20°.
